# EUROPEAN PATENT APPLICATION

(11) **EP 4 268 684 A1**
(43) Date of publication of application: **01.11.2023**
(21) Application number: 23170686.2
(22) Date of filing: 28.04.2023
(51) Int. Cl.: A47J 19/06

(54) **FOOD CHOPPER**

(30) Priority: 29.04.2022 US 202217733054
(71) Applicant: Lifetime Brands, Inc., Garden City, NY 11530 (US)
(72) Inventor: KRUS, Matthew, Seattle, WA 98118 (US); PIERCY, Samantha, Seattle, WA 98101 (US)
(74) Representative: Forresters IP LLP

(57) **Abstract**

A food chopper includes an upper handle and a lower handle secured to the upper handle, the lower handle including a receptacle extending from a proximalmost end thereof, the receptacle configured to receive a food item therein and the receptacle defining a track mechanism on an inner sidewall thereof. The food chopper further includes a pusher assembly including a pusher shaft and a pusher press plate, the pusher press plate having a boss protruding outwardly from a top surface thereof, wherein the boss is configured to releasably engage the track mechanism defined within the receptacle such that the pusher press plate remains flat as it travels within the receptacle.

## Description

### BACKGROUND

The present invention relates generally to food product choppers, and more specifically, to food product choppers including a pusher assembly that engages a tracking mechanism defined within a receptacle receiving food items.

Slicing food items has long been important in consumption and preparation of food. Some items are often sliced in multiple pieces for immediate consumption, such as a variety of fruits. Food items that serve as ingredients for other foods are also often sliced to a suitable size for being cooked with other ingredients. Other slicing applications include slicing food items to particularly sized or shaped pieces for aesthetic appearance or creating aesthetic patterns. Conventional methods and devices for cutting or slicing food items are time-consuming and/or complicated. A common conventional method is to use a single blade cutting device such as a knife. However, this method is time-consuming. It is also difficult to obtain substantially identical slices using a knife, which may be desirable for aesthetic or functional purposes. In addition, a knife cannot be used to simultaneously slice a piece of food into multiple pieces.

Other devices have included electric powered and manual devices with complicated mechanisms that make it difficult to control the size or shape of the slices. These devices are also time-consuming to clean and expensive to repair.

### SUMMARY

In accordance with an embodiment, a food chopper is provided. The food chopper includes an upper handle and a lower handle secured to the upper handle, the lower handle including a receptacle extending from a proximalmost end thereof, the receptacle configured to receive a food item therein and the receptacle defining a track mechanism on an inner sidewall thereof. The food chopper further includes a pusher assembly including a pusher shaft and a pusher press plate, the pusher press plate having a boss protruding outwardly from a top surface thereof, wherein the boss is configured to releasably engage the track mechanism defined within the receptacle such that the pusher press plate remains flat as it travels within the receptacle.

In accordance with another embodiment, food chopper is provided. The food chopper includes an upper handle, a lower handle secured to the upper handle, the lower handle including a receptacle defining a track mechanism on an inner sidewall thereof, a pusher assembly including a pusher shaft and a pusher press plate, the pusher press plate configured to be received within the receptacle, and a blade base releasably attached to a bottom portion of the receptacle, the blade base including a plurality of blades for chopping a food item received within the receptacle.

In accordance with yet another embodiment, food chopper is provided. The food chopper includes a receptacle defining a track mechanism on an inner sidewall thereof and a pusher assembly including a pusher shaft and a pusher press plate, the pusher press plate configured to be received within the receptacle and the pusher press plate having a boss protruding outwardly from a top surface thereof. The boss is configured to releasably engage the track mechanism defined within the receptacle such that the pusher press plate remains flat as it travels within the receptacle.

It should be noted that the exemplary embodiments are described with reference to different subject-matters. In particular, some embodiments are described with reference to method type claims whereas other embodiments have been described with reference to apparatus type claims. However, a person skilled in the art will gather from the above and the following description that, unless otherwise notified, in addition to any combination of features belonging to one type of subject-matter, also any combination between features relating to different subject-matters, in particular, between features of the method type claims, and features of the apparatus type claims, is considered as to be described within this document.

These and other features and advantages will become apparent from the following detailed description of illustrative embodiments thereof, which is to be read in connection with the accompanying drawings.

### BRIEF DESCRIPTION OF THE DRAWINGS

The invention will provide details in the following description of preferred embodiments with reference to the following figures wherein:
FIG. 1 illustrates an isometric view of a food chopper with a track mechanism, in accordance with an embodiment of the present invention;
FIG. 2 illustrates a side view of the food chopper of FIG. 1, in accordance with an embodiment of the present invention;
FIG. 3A illustrates a side view of the food chopper where the handles are opened to partially expose the press plunger mechanism, in accordance with an embodiment of the present invention;
FIG. 3B illustrates a side view of the food chopper where the handles are fully opened to fully expose the press plunger mechanism, in accordance with an embodiment of the present invention;
FIG. 4 illustrates a side cross-sectional view of the food chopper where the handles are in a closed configuration such that the press plunger mechanism is confined within the receptacle, in accordance with an embodiment of the present invention;
FIG. 5 illustrates a side cross-sectional view of the food chopper where the handles are in an open configuration such that the press plunger mechanism is exposed, in accordance with an embodiment of the present invention;
FIG. 6A illustrates a perspective view of the food chopper where a food item is inserted into the receptacle, in accordance with an embodiment of the present invention;
FIG. 6B illustrates a perspective view of the food chopper where the press plate of the press plunger mechanism engages the food item within the receptacle, in accordance with an embodiment of the present invention;
FIG. 6C illustrates a perspective view of the food chopper where the press plate of the press plunger mechanism pushes the food item toward the blades within the blade base of the receptacle to commence chopping of the food item, in accordance with an embodiment of the present invention;
FIG. 6D illustrates a perspective view of the food chopper where the food item is completely chopped by the blades within the blade base, in accordance with an embodiment of the present invention;
FIG. 7A illustrates an enlarged view of the boss attempting to engage the track of the track mechanism, in accordance with an embodiment of the present invention;
FIG. 7B illustrates an enlarged view of the boss engaging the track of the track mechanism, in accordance with an embodiment of the present invention;
FIG. 7C illustrates an enlarged view of the boss engaging the entire track of the track mechanism such that the handles are parallel to each other, in accordance with an embodiment of the present invention; and
FIG. 8 illustrates an exploded view of the food chopper, in accordance with an embodiment of the present invention.

Throughout the drawings, same or similar reference numerals represent the same or similar elements.

### DETAILED DESCRIPTION

In preparing food, it is often desirable to prepare foods by slicing them in strips or chopping them into small pieces. Most commonly, this is done by using a knife. There are other specialty-designed devices for chopping foods, including some devices including a lid having a grid of projections, which pivots downward to push the food item through a grid of blades. However, current chopping and slicing devices lack certain features that can make them less desirable and inconvenient to use. The exemplary embodiments of the present invention alleviate such issues by introducing a food chopper with a track mechanism defined within a receptacle.

Embodiments in accordance with the present invention provide for a food chopper including a track mechanism, the track mechanism defined within an inner sidewall of a receptable configured to receive a food item. The food chopper also includes a pusher assembly including a pusher shaft and a pusher press plate, the pusher press plate having a boss protruding outwardly from a top surface thereof, where the boss is configured to releasably engage the track mechanism defined within the receptacle such that the pusher press plate remains flat as it travels within the receptacle. As a result, the pusher press plate remains flat and aligned with the blades in a blade base attached to the bottom of the receptable. This configuration advantageously reduces the force needed to chop a food item received within the receptacle. Additionally, this configuration advantageously keeps the pusher press plate from moving during the chopping process, thus providing for better stability of the pusher press plate during the chopping process.

It is to be understood that the present invention will be described in terms of a given illustrative architecture; however, other architectures, structures, substrate materials and process features and steps/blocks can be varied within the scope of the present invention. It should be noted that certain features cannot be shown in all figures for the sake of clarity. This is not intended to be interpreted as a limitation of any particular embodiment, or illustration, or scope of the claims.

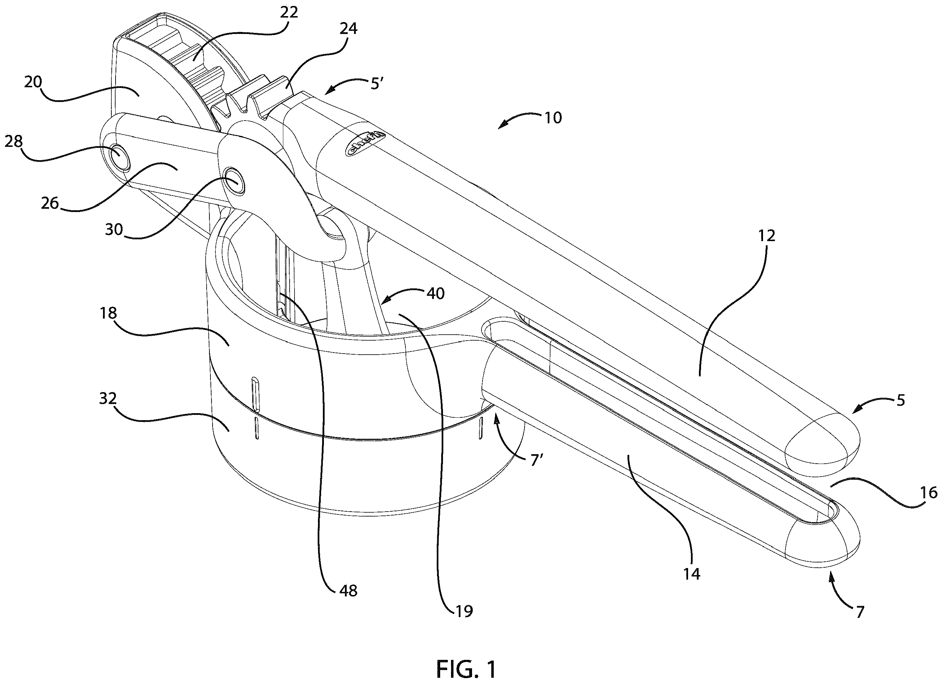

FIG. 1 illustrates an isometric view of a food chopper with a track mechanism, in accordance with an embodiment of the present invention.

The food chopper 10 can be used to chop food items received within the receptacle 18.

The food chopper includes an upper handle 12 and a lower handle 14. The upper handle 12 can be moved relative to the lower handle 14 to open and close the food chopper 10. In a closed configuration, the upper handle 14 remains parallel to the lower handle 12 such that a gap or opening 16 is present between the upper handle 14 and the lower handle 12. The upper handle 12 and the lower handle 14 can define distalmost ends 5, 7 and proximalmost ends 5', 7', respectively.

A gear assembly including a first gear 24 and a second gear 22 provides a mechanical advantage so that relatively large compression forces can be applied to food items held within the receptacle 18. The first gear 24 is positioned at a proximalmost end 5' of the upper handle 12. The second gear 22 is positioned adjacent the first gear 24. Thus, the upper handle 12 includes a first gear 24 at a proximalmost end thereof and the lower handle 14 includes a second gear 22 at a proximalmost end thereof such that the first gear 24 is configured to mechanically cooperate with the second gear 22 to actuate the upper handle 12.

The lower handle 14 is integrally connected to the receptacle 18 at a proximalmost end 7' thereof. The receptacle 18 includes a head 20 (or cam member) on an opposed end of the lower handle 14. The head 20 houses the second gear 22 that mechanically cooperates with the first gear 24 of the upper handle 12. The first gear 24 mechanically cooperates with the second gear 22 via the linkage 26. The linkage 26 is fixedly attached to the second gear 22 via gear pin 28 and the linkage 26 is fixedly attached to the first gear 24 via linkage pin 30. The distal end of the linkage 26 secures the pusher assembly 40.

The pusher assembly 40, in a closed configuration, is shown resting within an opening 19 of the receptable 18. The receptacle 18 includes a track mechanism 48. The track mechanism 48 will be described in detail further below.

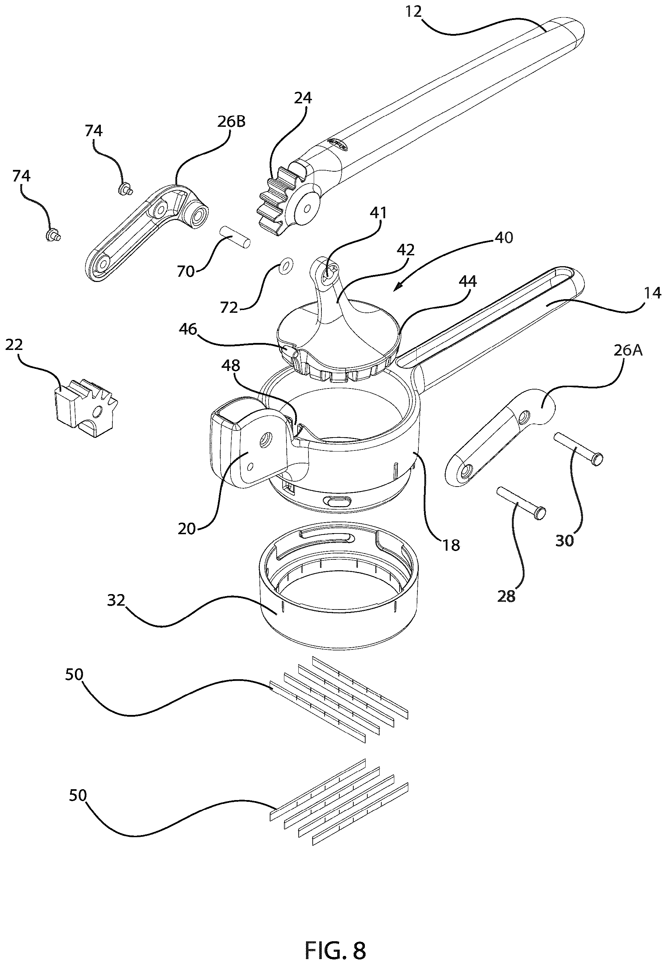

Additionally, a blade base 32 is releasably attached to the bottom of the receptacle 18. The blade base 32 includes a plurality of blades 50 therein (FIG. 8). The blades 50 are configured to chop food items received within the receptacle 18 and pressed by the pusher assembly 40, as discussed in detail further below.

The upper handle 12 and the lower handle 14 can be comfortably held in a user's hands. The shapes, configurations, and dimensions of the upper handle 12 and the lower handle 14 can be selected based on a wide variety of different types of design requirements, including, without limitation, whether the food chopper 10 is for one-handed or two-handed operation, based on the user's hand size, desired operating forces, or the like.

The position of the receptacle 18 relative to other features can be selected to achieve the desired mechanical advantage and movement of the pusher assembly 40.

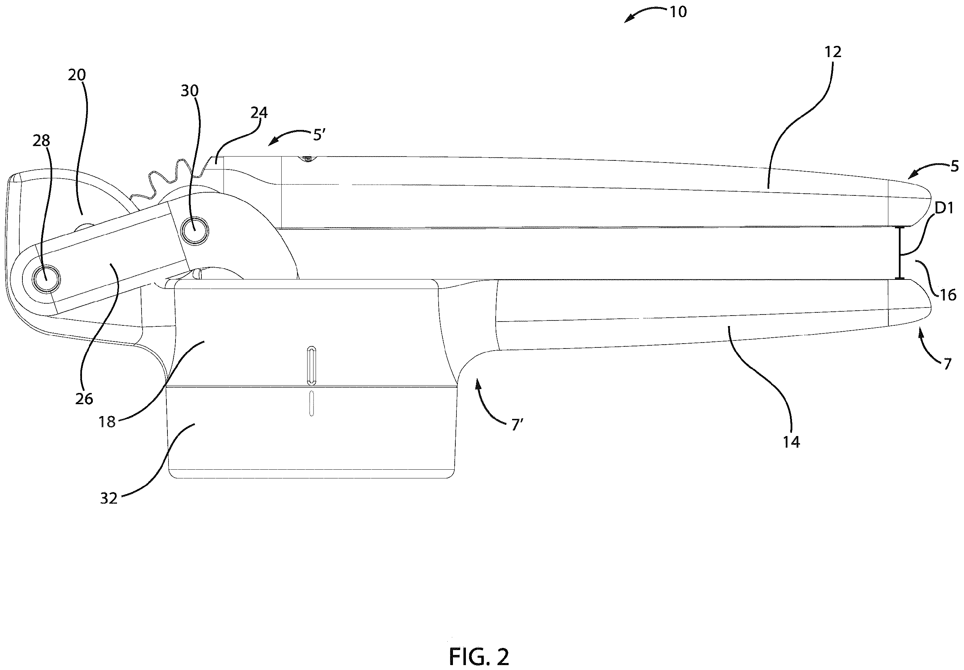

FIG. 2 illustrates a side view of the food chopper of FIG. 1, in accordance with an embodiment of the present invention.

The side view further illustrates the elements of food chopper 10. In a closed configuration, the upper handle 12 remains parallel to the lower handle 14 such that a gap or opening 16 is formed therebetween. The opening 16 can be defined by a distance D1. Additionally, the first gear 24 is shown extending from the upper handle 12 at a proximalmost end 5'. The upper handle 12 and the first gear 24 can be one single, integrated unit. A receptacle 18 is shown extending from the lower handle 14 at a proximalmost end 7'. The head 20 extends from the receptacle 18. The lower handle 14, the receptacle 18, and the head 20 can be one single, integrated unit. The blade base 32 is also shown releasably attached to the bottom of the receptacle 18.

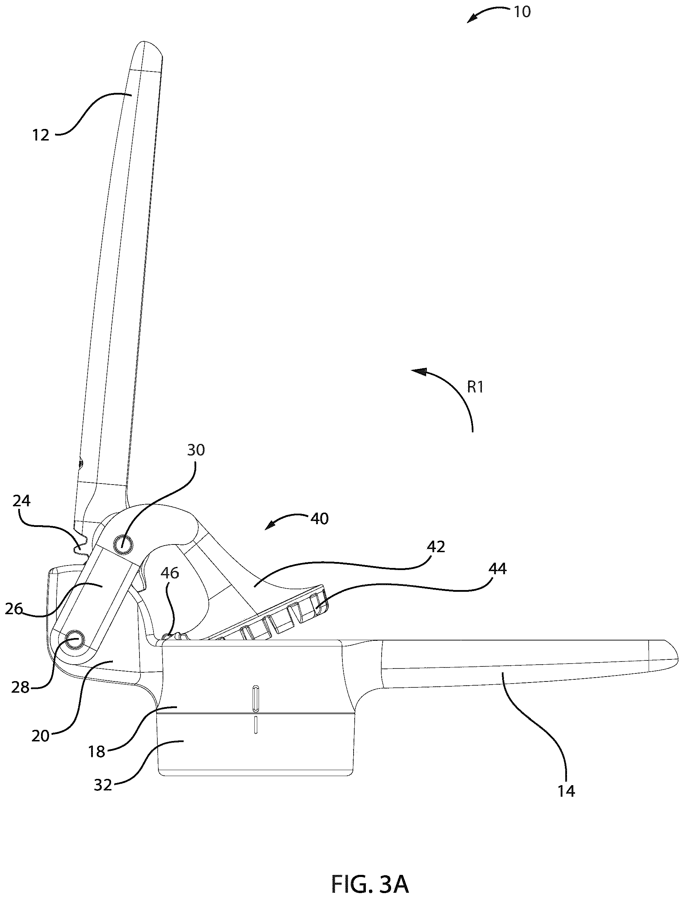

FIG. 3A illustrates a side view of the food chopper where the handles are opened to partially expose the press plunger mechanism, in accordance with an embodiment of the present invention.

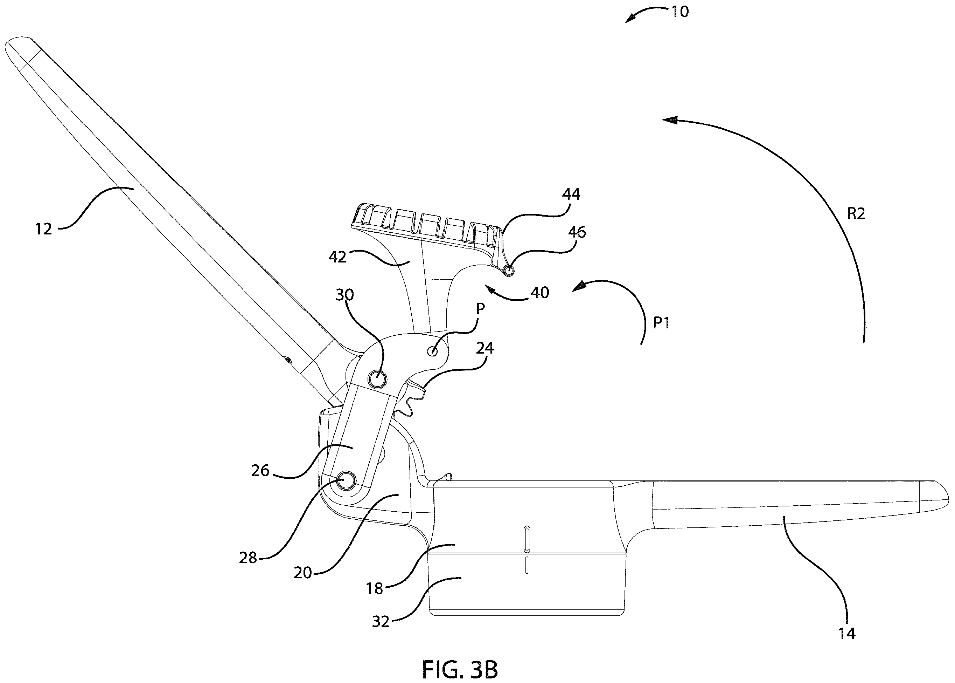

In FIG. 3A, the upper handle 12 of the food chopper 10 is actuated in a direction R1, whereas the lower handle 14 remains fixed. The actuation or movement of the upper handle 12 causes the pusher assembly 40 to be partially exposed, that is, partially removed from the receptacle 18. The pusher assembly 40 includes a pusher shaft 42 and a pusher press plate 44. The pusher assembly 40 also includes a boss 46 on a top surface of the pusher press plate 44. The boss 46 is more visible in FIG. 3B described below.

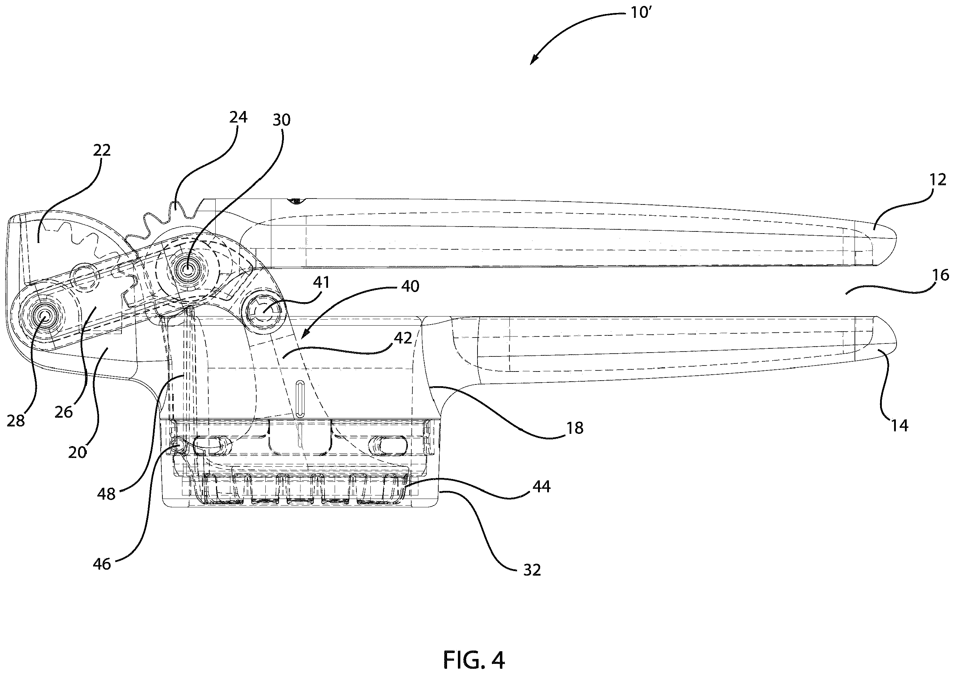

The distal end of the linkage 26 secures the pusher assembly 40. In particular, the distal end of the linkage 26 mechanically connects to the pusher assembly connector 41 (FIG. 4) of the pusher shaft 42. Therefore, actuation of the upper handle 12 results in mechanical cooperation between the first gear 24 and the second gear 22 that moves or rotates the linkage 26 such that the pusher assembly 40 is slowly removed from the receptacle 18. It is noted that the lower handle 14, the receptacle 18, and the head 20 remain fixed in place as the upper handle 12 is being actuated by a user.

A wide range of different types of pusher press plates can be used. For example, the pusher press plate 44 can be curved, partially spherical (dome-shaped), or have any other shape or configuration suitable for processing food. The illustrated pusher press plate 44 has a generally circular shape. The complementary shaped receptacle 18 closely receives the pusher press plate 44. In other embodiments, the pusher press plate 44 has a generally circular shape, polygonal shape (e.g., a square shape, a rectangular shape, etc.), or the like.

FIG. 3B illustrates a side view of the food chopper where the handles are fully opened to fully expose the press plunger mechanism, in accordance with an embodiment of the present invention.

In FIG. 3B, the upper handle 12 of the food chopper 10 is actuated further to the left in a direction R2, whereas the lower handle 14 remains fixed. The further actuation of upper handle 12 results in the pusher assembly 40 being fully exposed or fully removed from the receptacle 18. In this fully opened configuration, the pusher assembly 40 can swivel in a direction P1 about pivot point "P." Thus, the pusher assembly 40 swivels about a pivot point "P" on the proximalmost end of the pusher shaft 42 when the pusher press plate 44 is outside the receptacle 18.

The elements of the pusher assembly 40 are now clearly shown. For instance, the pusher shaft 42 is illustrated mechanically linked to the linkage 26. The pusher shaft 42 includes a pusher press plate 44 at a distal end thereof. Additionally, the boss 46 is shown as a projection from the top surface of the pusher press plate 44. The boss 46 extends beyond the outer perimeter of the pusher press plate 44. The boss 46 is thus vertically offset from the pusher press plate 44. In one example, the boss 46 can have a substantially or generally cylindrical shape.

FIG. 4 illustrates a side cross-sectional view of the food chopper where the handles are in a closed configuration such that the press plunger mechanism is confined within the receptacle, in accordance with an embodiment of the present invention.

The cross-sectional view 10' depicts the pusher assembly 40 within the receptacle 18. The pusher shaft 42 and the pusher press plate 44 are both enclosed within the receptacle 18. The pusher press plate 44 remains flat or parallel to the base of the receptacle 18. The boss 46 is also shown within the track mechanism 48. The boss 46 travels vertically within the track mechanism 48. Moreover, in this cross-sectional view 10', the pusher assembly connector 41 is visible and depicts the pivot point of the pusher assembly 40. In this closed configuration, the pusher assembly 40 is stabilized or secure within the receptacle 18.

The track mechanism 48 is a guide path extending vertically on the inner sidewall of the receptacle 18. In one example, the track mechanism 48 extends an entire vertical length of the inner sidewall of the receptacle 18. The track mechanism 48 is horizontally aligned with the lower handle 14. The track mechanism 48 is positioned on an opposed end of the lower handle 14.

Additionally, the mechanical cooperation between the first gear 24 and the second gear 22 is further illustrated. The first gear 24 extends from the upper handle 12. The second gear 22 is housed within the head 20 (or cam member). The linkage 26 connects the first gear 24 to the second gear 22 via the gear pin 28 and the linkage pin 30.

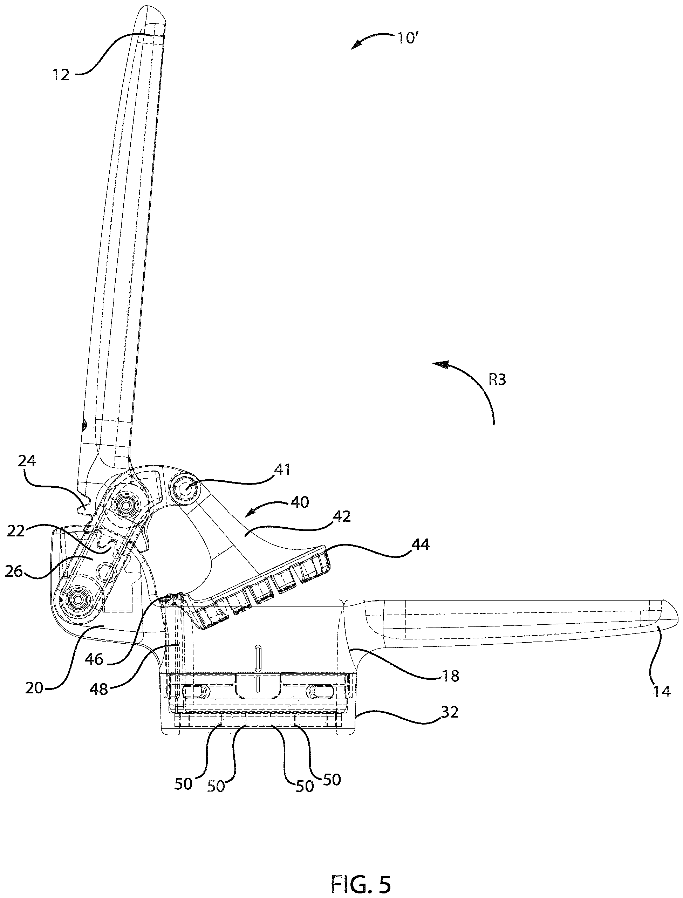

FIG. 5 illustrates a side cross-sectional view of the food chopper where the handles are in an open configuration such that the press plunger mechanism is exposed, in accordance with an embodiment of the present invention.

The cross-sectional view 10' depicts the pusher assembly 40 being removed from the receptacle 18 when the upper handle 12 is actuated in a direction R3. The actuation of upper handle 12 results in the pusher assembly 40 being partially exposed. In this partially opened configuration, the pusher assembly 40 can swivel in a direction P1 about pivot point "P," as shown in FIG. 3B, or rotated or swiveled about pusher assembly connector 41. The elements of the pusher assembly 40 are now clearly shown. For instance, the pusher shaft 42 is illustrated mechanically linked to the linkage 26. The pusher shaft 42 includes the pusher press plate 44 at a distal end thereof. Additionally, the boss 46 is shown as a projection from the top surface of the pusher press plate 44. The boss 46 extends beyond the outer perimeter of the pusher press plate 44. The boss 46 travels vertically within the track mechanism 48 such that the pusher press plate 44 remains flat or parallel to the bottom surface of the receptacle 18 up until the boss 46 reaches the topmost point of the track mechanism 48.

The boss 46 is secured to the receptacle 18 on an opposed end of the lower handle 14 and the boss 46 has a generally cylindrical shape.

FIG. 5 also illustrates the blades 50 within the blade base 32.

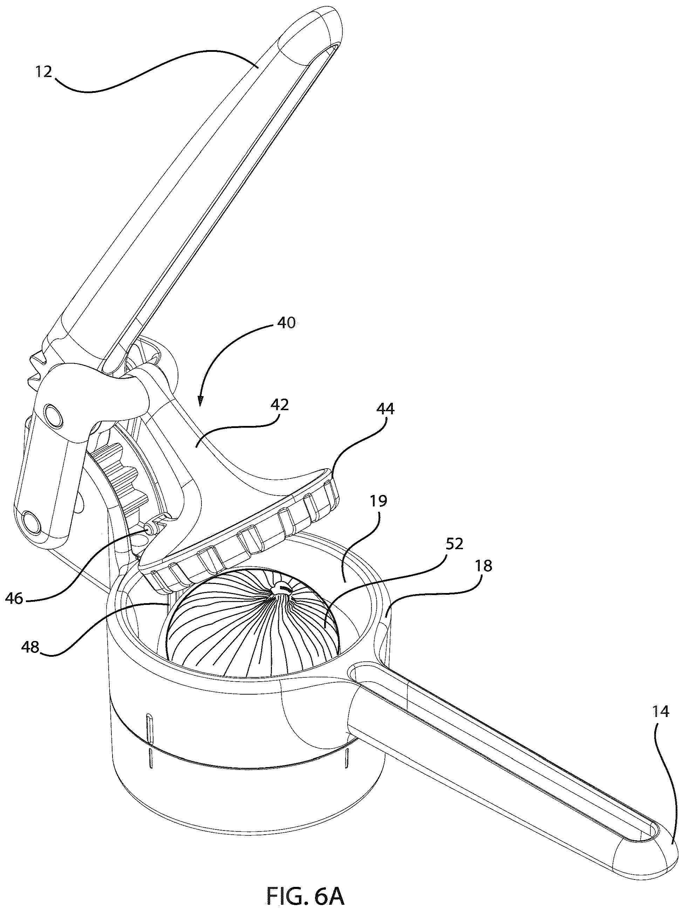

FIG. 6A illustrates a perspective view of the food chopper where a food item is inserted into the receptacle, in accordance with an embodiment of the present invention.

In operation, a food item 52 is placed within the opening 19 of the receptacle 18. The food item 52, can be, e.g., an onion. The pusher assembly 40 is located outside the confines of the receptacle 18. Thus, the pusher shaft 42 and the pusher press plate 44 are positioned outside of the opening 19 of the receptacle 18. The pusher press plate 44 is not yet in contact with the food item 52. The boss 46 has not yet engaged the track mechanism 48 defined on the inner sidewall of the receptacle 18. The upper handle 12 can be considered to be in a substantially opened configuration.

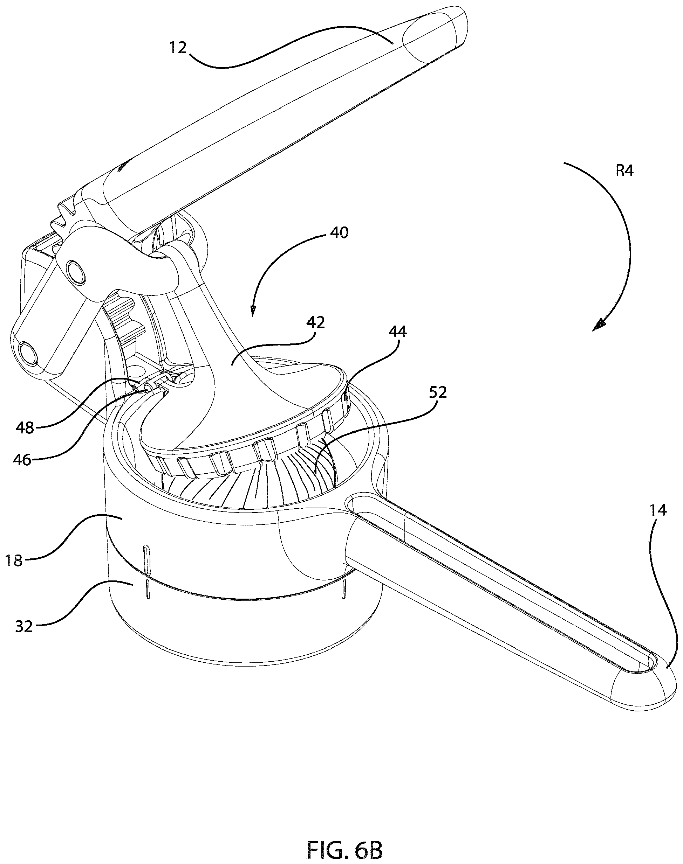

FIG. 6B illustrates a perspective view of the food chopper where the press plate of the press plunger mechanism engages the food item within the receptacle, in accordance with an embodiment of the present invention.

In continued operation, the upper handle 12 is actuated in a direction R4 such that the pusher press plate 44 directly contacts the food item 52 positioned within the receptacle 18. The boss 46 enters the track mechanism 48. The boss 46 can be, e.g., at the topmost point of the track mechanism 48. The boss 46 is configured to snugly fit within the track mechanism 48. Once the boss 46 reaches the topmost point of the track mechanism 48, the pusher assembly pivots such that the pusher press plate 44 becomes flat upon entry into the receptacle 18. In other words, the pusher press plate 44 becomes parallel to the bottom surface of the receptacle 18 right when the boss 46 reaches the topmost point of the track mechanism 48.

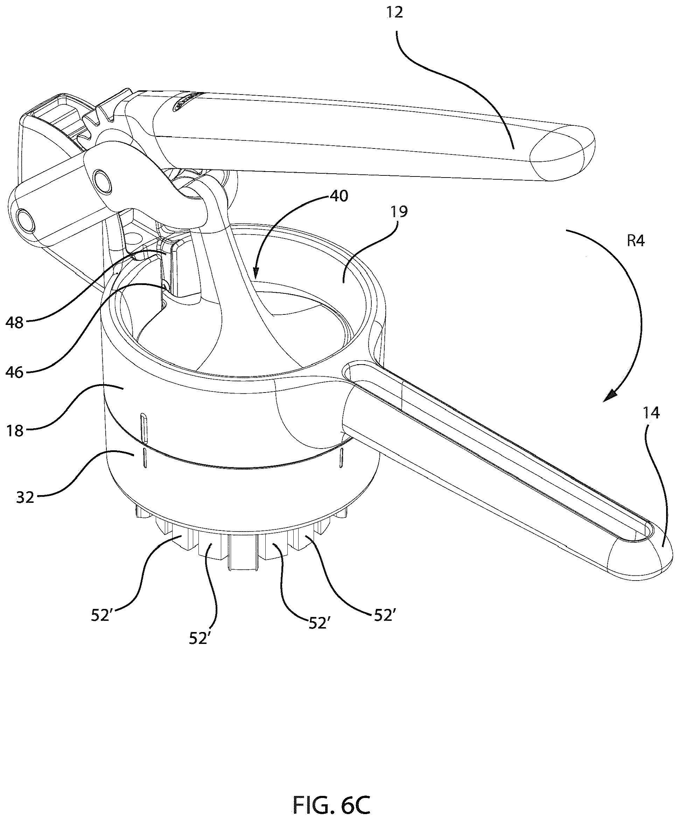

FIG. 6C illustrates a perspective view of the food chopper where the press plate of the press plunger mechanism pushes the food item toward the blades within the blade base of the receptacle to commence chopping of the food item, in accordance with an embodiment of the present invention.

In continued operation, further actuating motion R4 of the upper handle 12 results in the pusher press plate 44 commencing chopping of the food item 52 such that chopped portions 52' of the food item 52 are released or ejected from the blade base 32. The boss 46 is shown, e.g., halfway down the track mechanism 48. The boss 46 moves vertically down the track mechanism 48. The track mechanism 48 is perpendicular to the lower handle 14. The track mechanism 48 stabilizes the boss 46 such that the pusher press plate 44 remains stable and flat as it travels down the receptacle 18. In fact the entire pusher assembly 40 is stable and travels vertically down or perpendicular to the lower handle 14.

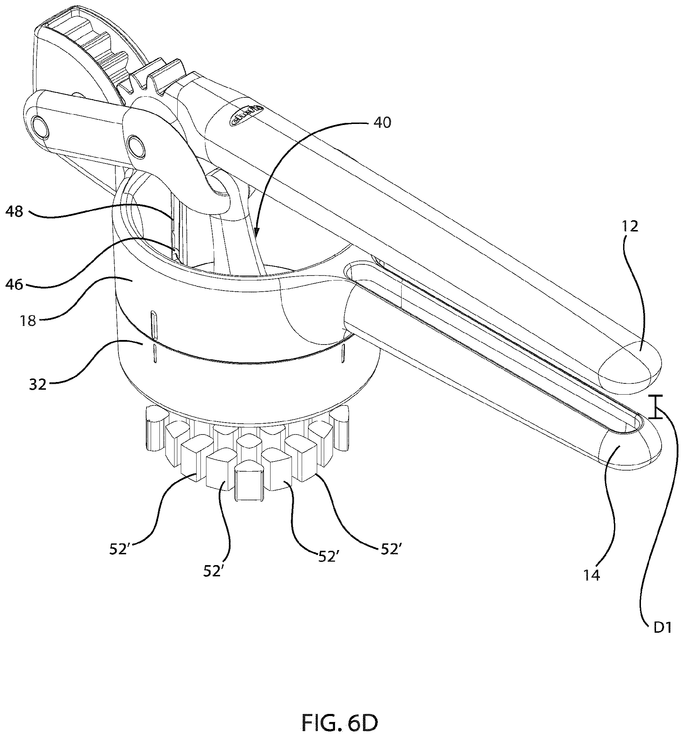

FIG. 6D illustrates a perspective view of the food chopper where the food item is completely chopped by the blades within the blade base, in accordance with an embodiment of the present invention.

In continued operation, further actuating motion of the upper handle 12 results in the pusher press plate 44 completing chopping of the food item 52 such that chopped portions 52' of the food item 52 are completely released from the blade base 32. The boss 46 is shown to have traveled the entire length of the track mechanism 48. In one example, the entire vertical length of the track mechanism 48 is equal to an entire vertical length of the receptacle 18. As noted before, the boss 46 moves vertically down the track mechanism 48, to the distalmost area or distalmost point of the track mechanism 48. The track mechanism 48 is perpendicular to the lower handle 14. The track mechanism 48 stabilizes the boss 46 such that the pusher press plate 44 remains stable and flat as it travels down the receptacle 18. In fact the entire pusher assembly 40 is stable and travels vertically down or perpendicular to the lower handle 14.

When the boss 46 reaches the distalmost area or distalmost point of the track mechanism 48, the upper handle 12 becomes parallel with the lower handle 14 defined by distance D 1. In other words, the food chopper 10 is in a closed configuration. Moreover, when the upper handle 12 is parallel to the lower handle 14, the boss 46 of the pusher press plate 44 is vertically aligned with the first gear 24 of the upper handle 12 (FIG. 4).

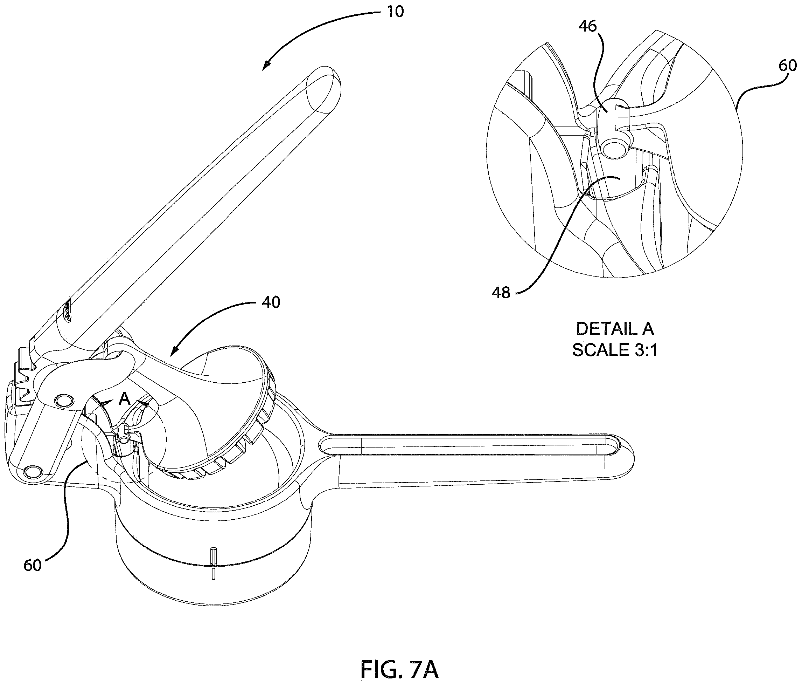

FIG. 7A illustrates an enlarged view of the boss attempting to engage the track of the track mechanism, in accordance with an embodiment of the present invention.

The enlarged view 60 clearly illustrates the boss 46 and the top of the track mechanism 48. The boss 46 is about to enter the topmost point or region of the track mechanism 48 so that the pusher press plate 44 can assume a flat position to enter the receptacle 18.

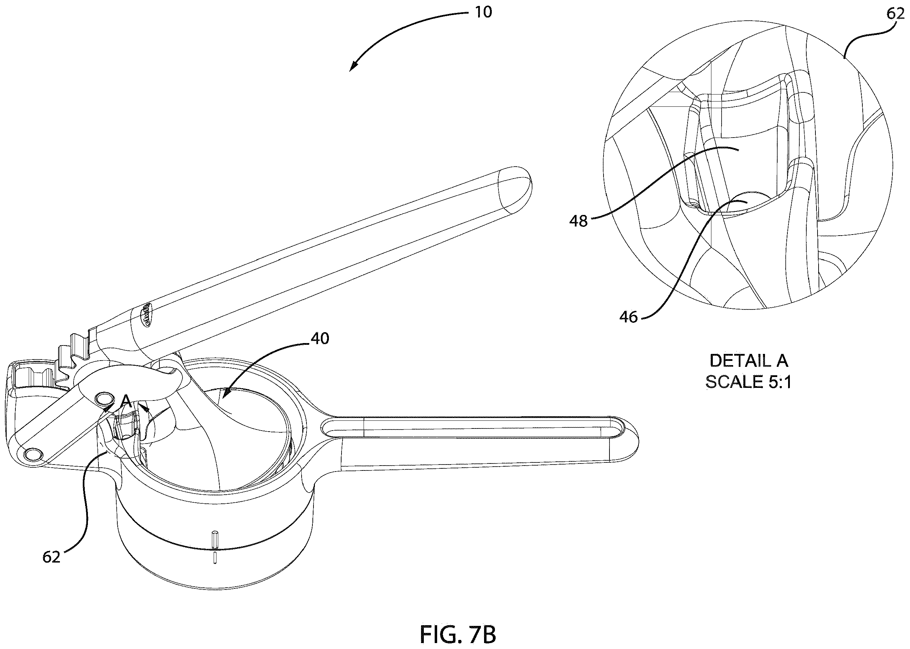

FIG. 7B illustrates an enlarged view of the boss engaging the track of the track mechanism, in accordance with an embodiment of the present invention.

The enlarged view 62 clearly illustrates the boss 46 and the track mechanism 48. The boss 46 entered the topmost point or region of the track mechanism 48 so that the pusher press plate 44 is now in a flat position within the receptacle 18. The boss 46 has traveled a vertical distance within the track mechanism 48, which acts as a guide to guide and direct the boss 46 in a downward, vertical direction.

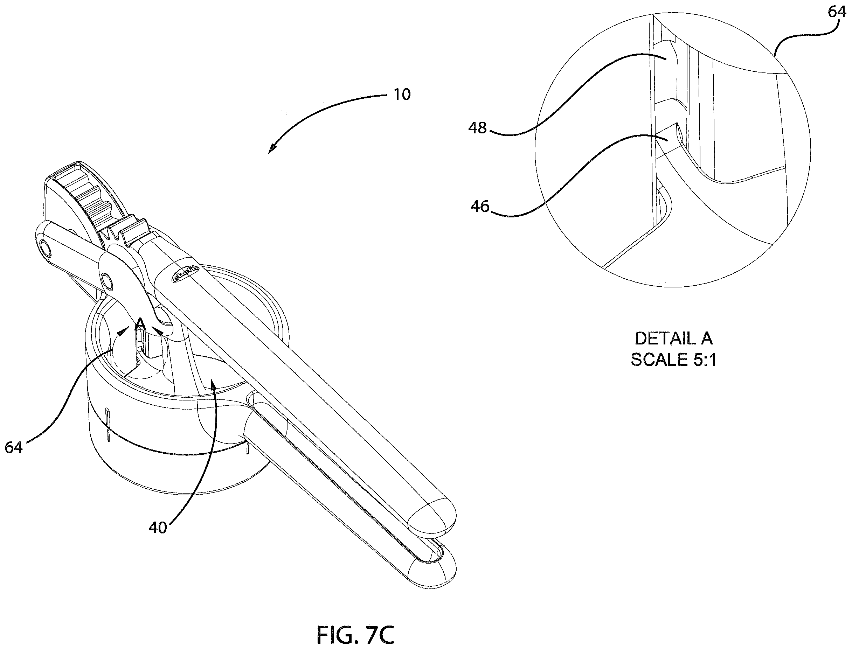

FIG. 7C illustrates an enlarged view of the boss engaging the entire track of the track mechanism such that the handles are parallel to each other, in accordance with an embodiment of the present invention.

The enlarged view 64 clearly illustrates the boss 46 and the bottom of the track mechanism 48. The boss 46 has reached the bottommost point or region of the track mechanism 48 so that the pusher press plate 44 reaches the bottommost surface of the receptacle 18 to eject all chopper food items. The boss 46 has traveled the entire vertical distance within the track mechanism 48, which acts as a guide to guide and direct the boss 46 in a downward, vertical direction. In this position, the upper handle 12 is parallel to the lower handle 14.

FIG. 8 illustrates an exploded view of the food chopper, in accordance with an embodiment of the present invention.

The exploded view illustrates the first gear 24 integrally connected to the upper handle 12. The lower handle 14 is integrally connected to the receptable 18 and the head 20. The head 20 accommodates the second gear 22 therein. The receptacle 18 further defines the track mechanism 48 extending vertically along an inner sidewall thereof. The pusher assembly 40 is shown over the receptacle 18, the pusher assembly 40 including the pusher shaft 42 and the pusher press plate 44. Additionally, the pusher assembly connector 41 is clearly shown. The pusher assembly connector 41 is connected to the linkage 26 (shown as right linkage 26A and left linkage 26B) via plunger connection pin 70 and O-ring 72. The right linkage 26A is connected to the left linkage 26B by gear pin 28 and linkage pin 30. Caps 74 for pins 28, 30 can also be provided. The pusher assembly 40 further depicts the boss 46 extending outwardly from a top surface of the pusher press plate 44. Finally, blades 50 are incorporated within the blade base 32, the blade base 32 releasably attached to the receptacle 18.

In summary, a food chopper 10 includes an upper handle 12 and a lower handle 14 secured to the upper handle 12, the lower handle 14 including a receptacle 18 extending from a proximalmost end thereof, the receptacle 18 configured to receive a food item 52 therein and the receptacle 18 defining a track mechanism 48 on an inner sidewall thereof. A pusher assembly 40 includes a pusher shaft 42 and a pusher press plate 44, the pusher press plate 44 having a boss 46 protruding outwardly from a top surface thereof, wherein the boss 46 is configured to releasably engage the track mechanism 48 defined within the receptacle 18 such that the pusher press plate 44 remains flat as it travels within the receptacle 18. A blade base 32 is releasably attached to a bottom portion of the receptacle 18, the blade base 32 including a plurality of blades 50. The track mechanism 48 keeps the pusher press plate 44 flat and aligned with the blades 50. The track mechanism 48 further reduces the amount of force needed to chop the food items 52 during the chopping process. Rubbing of the blades 50, potentially causing plastic shavings is also prevented.

In exemplary, but not limiting, embodiments, the food is a fruit or a vegetable, for example a tomato, cucumber, onion, lettuce, potato, apple, lemon, or orange. In other nonlimiting embodiments, the food is a protein, for example a hard-boiled egg. While embodiments may be used to slice any of a variety of foods, the present disclosure used the example of an onion for reference and clarity without limiting the types of food to be sliced.

While there have been shown, described and pointed out fundamental novel features of the present principles, it will be understood that various omissions, substitutions and changes in the form and details of the methods described and devices illustrated, and in their operation, may be made by those skilled in the art without departing from the spirit of the same. For example, it is expressly intended that all combinations of those elements and/or method steps which perform substantially the same function in substantially the same way to achieve the same results are within the scope of the present principles. Moreover, it should be recognized that structures and/or elements and/or method steps shown and/or described in connection with any disclosed form or implementation of the present principles may be incorporated in any other disclosed, described or suggested form or implementation as a general matter of design choice. It is the intention, therefore, to be limited only as indicated by the scope of the claims appended hereto.

It should also be understood that the example embodiments disclosed and taught herein are susceptible to numerous and various modifications and alternative forms. Thus, the use of a singular term, such as, but not limited to, "a" and the like, is not intended as limiting of the number of items. Furthermore, the naming conventions for the various components, functions, parameters, thresholds, and other elements used herein are provided as examples, and can be given a different name or label. The use of the term "or" is not limited to exclusive "or" but can also mean "and/or".

Having described preferred embodiments, which serve to illustrate various concepts, structures and techniques that are the subject of this patent, it will now become apparent to those of ordinary skill in the art that other embodiments incorporating these concepts, structures and techniques may be used. Additionally, elements of different embodiments described herein may be combined to form other embodiments not specifically set forth above.

Accordingly, it is submitted that that scope of the patent should not be limited to the described embodiments but rather should be limited only by the spirit and scope of the following claims.

### REPRESENTATIVE FEATURES

1. A food chopper comprising:
   an upper handle;
   a lower handle secured to the upper handle, the lower handle including a receptacle extending from a proximalmost end thereof, the receptacle configured to receive a food item therein and
   the receptacle defining a track mechanism on an inner sidewall thereof; and
   a pusher assembly including a pusher shaft and a pusher press plate, the pusher press plate having a boss protruding outwardly from a top surface thereof, wherein the boss is configured to releasably engage the track mechanism defined within the receptacle such that the pusher press plate remains flat as it travels within the receptacle.
2. The food chopper of clause 1, wherein a blade base is releasably attached to a bottom portion of the receptacle, the blade base including a plurality of blades.
3. The food chopper of clause 1, wherein the track mechanism is a guide path extending vertically on the inner sidewall of the receptacle.
4. The food chopper of clause 1, wherein the track mechanism extends an entire vertical length of the inner sidewall of the receptacle.
5. The food chopper of clause 1, wherein the track mechanism is horizontally aligned with the lower handle.
6. The food chopper of clause 1, wherein the track mechanism is positioned on an opposed end of the lower handle.
7. The food chopper of clause 1, wherein the boss is fixedly secured to the receptacle on an opposed end of the lower handle.
8. The food chopper of clause 1, wherein the boss has a generally cylindrical shape.
9. The food chopper of clause 1, wherein the pusher assembly swivels about a pivot point on the proximalmost end of the pusher shaft when the pusher press plate is outside the receptacle.
10. The food chopper of clause 1, wherein the upper handle includes a first gear at a proximalmost end thereof and the lower handle includes a second gear at a proximalmost end thereof such that the first gear is configured to mechanically cooperate with the second gear to actuate the upper handle.
11. The food chopper of clause 10, wherein, when the upper handle is parallel to the lower handle, the boss of the pusher press plate is vertically aligned with the first gear of the upper handle.
12. The food chopper of clause 1, wherein the pusher shaft is connected to a linkage securing the upper handle to the lower handle.
13. A food chopper comprising:
   an upper handle;
   a lower handle secured to the upper handle, the lower handle including a receptacle defining a track mechanism on an inner sidewall thereof;
   a pusher assembly including a pusher shaft and a pusher press plate, the pusher press plate configured to be received within the receptacle; and
   a blade base releasably attached to a bottom portion of the receptacle, the blade base including a plurality of blades for chopping a food item received within the receptacle.
14. The food chopper of clause 13, wherein the pusher press plate has a boss protruding outwardly from a top surface thereof.
15. The food chopper of clause 14, wherein the boss is configured to releasably engage the track mechanism defined within the receptacle such that the pusher press plate remains flat as it travels within the receptacle.
16. The food chopper of clause 14, wherein the boss is fixedly secured to the receptacle on an opposed end of the lower handle.
17. The food chopper of clause 14,
   wherein the upper handle includes a first gear at a proximalmost end thereof and the lower handle includes a second gear at a proximalmost end thereof such that the first gear is configured to mechanically cooperate with the second gear to actuate the upper handle; and
   wherein, when the upper handle is parallel to the lower handle, the boss of the pusher press plate is vertically aligned with the first gear of the upper handle.
18. The food chopper of clause 13,
   wherein the track mechanism is a guide path extending vertically on the inner sidewall of the receptacle;
   wherein the track mechanism extends an entire vertical length of the inner sidewall of the receptacle; and
   wherein the track mechanism is horizontally aligned with the lower handle.
19. A food chopper comprising:
   a receptacle defining a track mechanism on an inner sidewall thereof; and
   a pusher assembly including a pusher shaft and a pusher press plate, the pusher press plate configured to be received within the receptacle and the pusher press plate having a boss protruding outwardly from a top surface thereof.
20. The food chopper of clause 19, wherein the boss is configured to releasably engage the track mechanism defined within the receptacle such that the pusher press plate remains flat as it travels within the receptacle.

## Claims

1. A food chopper comprising:
an upper handle;
a lower handle secured to the upper handle, the lower handle including a receptacle extending from a proximalmost end thereof, the receptacle configured to receive a food item therein and the receptacle defining a track mechanism on an inner sidewall thereof; and
a pusher assembly including a pusher shaft and a pusher press plate, the pusher press plate having a boss protruding outwardly from a top surface thereof, wherein the boss is configured to releasably engage the track mechanism defined within the receptacle such that the pusher press plate remains flat as it travels within the receptacle.

2. The food chopper of claim 1, wherein a blade base is releasably attached to a bottom portion of the receptacle, the blade base including a plurality of blades.

3. The food chopper of any preceding claim, wherein the track mechanism is a guide path extending vertically on the inner sidewall of the receptacle.

4. The food chopper of any preceding claim, wherein the track mechanism extends an entire vertical length of the inner sidewall of the receptacle.

5. The food chopper of any preceding claim, wherein the track mechanism is horizontally aligned with the lower handle.

6. The food chopper of any preceding claim, wherein the track mechanism is positioned on an opposed end of the lower handle.

7. The food chopper of any preceding claim, wherein the boss is fixedly secured to the receptacle on an opposed end of the lower handle.

8. The food chopper of any preceding claim, wherein the boss has a generally cylindrical shape.

9. The food chopper of any preceding claim, wherein the pusher assembly swivels about a pivot point on the proximalmost end of the pusher shaft when the pusher press plate is outside the receptacle.

10. The food chopper of any preceding claim, wherein the upper handle includes a first gear at a proximalmost end thereof and the lower handle includes a second gear at a proximalmost end thereof such that the first gear is configured to mechanically cooperate with the second gear to actuate the upper handle.

11. The food chopper of claim 10, wherein, when the upper handle is parallel to the lower handle, the boss of the pusher press plate is vertically aligned with the first gear of the upper handle.

12. The food chopper of any preceding claim, wherein the pusher shaft is connected to a linkage securing the upper handle to the lower handle.
